# EUROPÄISCHE PATENTSCHRIFT

(11) **EP 1 068 787 B1**
(45) Veröffentlichungstag und Bekanntmachung des Hinweises auf die Patenterteilung: **29.10.2003**
(21) Anmeldenummer: 99710005.2
(22) Anmeldetag: 15.07.1999
(51) Int. Cl.: A01D 34/68, B62M 25/04

(54) **Landschaftspflegegerät**
Ground cultivating device
Dispositif de travail du sol

(43) Veröffentlichungstag der Anmeldung: 17.01.2001
(73) Patentinhaber: Tielbürger, Dirk, 32369 Rahden (DE)
(72) Erfinder: Tielbürger, Dirk, 32369 Rahden (DE)
(74) Vertreter: Stracke, Alexander, Dipl.-Ing.

(56) Entgegenhaltungen:
- EP-A- 0 242 443
- EP-A- 0 810 150
- US-A- 5 542 241
- US-A- 5 676 022
- US-A- 5 732 598

## Beschreibung

Die Erfindung betrifft ein Landschaftspflegegerät mit einem Motor, einem Werkzeugantrieb und gegebenenfalls einem Fahrantrieb, die von im Bereich der Lenkergriffe der das Landschaftspflegegerät führenden Person angeordneten, drehbaren Bedienungselementen einstellbar sind (siehe EP-A-0 242 443).

Die Grundausführung des in Frage kommenden Landschaftspflegegerätes ist bevorzugt ein Einachsschlepper, kann jedoch auch ein Rasentraktor oder ein Kleinschlepper sein. Derartige Geräte können mit vielen Anbaugeräten gekoppelt werden, zum Beispiel mit Mähbalken, Vertikutierern, Geräten zur Bodenbearbeitung, Schneefräsen, Kehrgeräten und dergleichen. Sofern es sich um einen Einachsschlepper als Hauptgerät handelt, ist dieser mit einem Lenker ausgestattet. An dem Lenker sind die Bedienungselemente zur Einstellung der Geschwindigkeiten des Werkzeugantriebes und gegebenenfalls des Fahrantriebes angeordnet. Der Werkzeugantrieb und gegebenenfalls der Fahrantrieb sind stufenlos verstellbar und zu einer Antriebseinheit zusammengefaßt, die in der Branche auch als Variatorantrieb bezeichnet wird. Als Bedienungselemente sind sowohl Zughebel wie auch Drehgrifgriffe bekannt, die während der Arbeit mit dem Landschaftspflegegerät in den entsprechenden Stellungen gehalten werden müssen.

Die in Rede stehenden Landschaftspflegegeräte haben sich in der Praxis bestens bewährt. Als nachteilig hat es sich herausgestellt, daß bei den bisher bekannten Landschaftspflegegeräten die Bedienungselemente von Hand gehalten werden müssen.

Es ist auch bekannt, selbsthemmende Stellhebel zu verwenden, diese sind aber außerhalb des Bereiches der Lenkergriffe angeordnet, so daß zum Zwecke der Bedienung umgegriffen werden muß.

Der Erfindung liegt die Aufgabe zugrunde, ein Landschaftspflegegerät der eingangs näher beschriebenen Art so weiter zu entwickeln, daß die Bedienung für die das Landschaftspflegegerät führende Person vereinfacht und angenehmer wird. Außerdem sollen die Geschwindigkeiten für den Werkzeugantrieb und gegebenenfalls für den Fahrantrieb exakt einstellbar sein.

Diese Aufgabe wird erfindungsgemäß dadurch gelöst, daß jedes Bedienungselement für den Werkzeugantrieb und gegebenenfalls für den Fahrantrieb als in verschiedenen Einstellpositionen arretierendes Einstellelement ausgebildet ist.

Da nunmehr das Bedienungselement sowohl für den Werkzeugantrieb wie auch gegebenenfalls für den Fahrantrieb als in verschiedenen Einstellpositionen arretierendes Einstellelement ausgebildet ist, kann durch Betätigung das Bedienungselement in der jeweils gewünschten Einstellposition arretiert werden. Jeder Einstellposition ist eine ganz bestimmte Stellung des jeweiligen Antriebes zugeordnet, so daß auch eine davon abhängige Geschwindigkeit eingestellt wird. Sofern die Antriebe stufenlos sind, wird für jede Einstellposition ein ganz bestimmtes Übersetzungsverhältnis der treibenden zur getriebenen Scheibe eingestellt. Je höher die Anzahl der arretierbaren Einstellpositionen ist, desto geringer sind die Änderungen der Übersetzungsverhältnisse.

Nach einem weiteren Gedanken der Erfindung ist vorgesehen, daß jedes Bedienungselement mit einer die jeweilige Einstellposition erkennbar machenden Anzeige eine Baueinheit bildet.

Da die Bedienungselemente mit der Anzeige eine Baueinheit bilden, lassen diese sich einfach montieren. Durch die Anzeige ist außerdem sichergestellt, daß die das Landschaftspflegegerät führende Person über die jeweilige Einstellposition ständig informiert ist. Die Baueinheit wird so am Landschaftspflegegerät angebracht, daß das Einstellelement bequem zu bedienen ist, ohne daß beispielsweise ein Holm eines Lenkers losgelassen werden muß. Die Anzeige liegt selbstverständlich im Blickfeld der Person. Die Anzahl der Einstellpositionen richtet sich nach der Bauart des Landschaftspflegegerätes, wobei bei einer bevorzugten Ausführung die Antriebe in sieben verschiedene Übersetzungsverhältnisse eingestellt werden können. Das Bedienungselement kann in verschiedenen Ausführungen gestaltet sein. Es ist darauf zu achten, daß die Einstellvorgänge leicht durchzuführen sind, daß jedoch gewährleistet ist, daß nicht selbsttätig der jeweilige Antrieb in eine andere Einstellposition verstellt wird.

So kann beispielsweise das Bedienungselement ein Drehknopf oder ein Drehgriff sein, der antriebstechnisch mit einer die Anzeige bildenden Scheibe oder einem Zeiger gekoppelt ist. Durch eine Markierung der Scheibe kann dann auf einer Skala die jeweilige Einstellposition erkannt werden. Zweckmäßigerweise stehen die Drehachsen des Drehgriffes bzw. des Drehknopfes und der Scheibe oder dem Zeiger im rechten Winkel zueinander. Sofern die Baueinheit an einem Rohr eines Holmes des Führungslenkers des Landschaftspflegegerätes montiert ist, ist vorgesehen, daß der Drehknopf bzw. der Drehgriff konzentrisch zur Mittellängsachse des Holmes steht.

Gemäß einer weiteren Ausführungsform ist vorgesehen, daß das Bedienungselement ein Kipphebel ist, der antriebstechnisch mit einer die Anzeige bildenden Scheibe oder einem Zeiger gekoppelt ist. Durch eine Schwenkbewegung des Kipphebels kann dann der angeschlossene Antrieb eingestellt werden. Die Vergrößerung oder Verkleinerung des Übersetzungsverhältnisses richtet sich dann nach der Schwenkrichtung des Kipphebels, d. h., ob er im Uhrzeigersinn oder entgegen dem Uhrzeigersinn geschwenkt bzw. gekippt wird. Die Fahrgeschwindigkeit bzw. die Werkzeuggeschwindigkeit richtet sich auch nach der Antriebsdrehzahl des Motors. Da auch diese Drehzahl über ein Bedienungselement einstellbar ist, ist in weiterer Ausgestaltung vorgesehen, daß an der Baueinheit ein zusätzliches Bedienungselement, vorzugsweise in Form eines Zughebels, gelagert ist.

Damit sicher verhindert wird, daß ungewollt und selbsttätig der Antrieb in eine andere Einstellposition geschaltet wird, ist vorgesehen, daß das Bedienungselement in jeder Einstellposition durch Rastmittel arretiert ist, die durch einen bestimmten Kraftaufwand entriegelbar sind. Dabei ergibt sich eine konstruktiv einfache Lösung, wenn jedes Bedienungselement eine verdrehbare Scheibe aufweist, die entsprechend der Einstellposition am Umfang mit Ausnehmungen versehen ist, in die ein Rastelement, beispielsweise eine Kugel oder ein Zapfen eingreift. Durch Betätigung des Drehgriffes oder des Kipphebels wird die Scheibe angetrieben. Die Verbindung zwischen dem Bedienungselement bzw. der Baueinheit mit einem verstellbaren Teil des jeweiligen Antriebes erfolgt zweckmäßigerweise durch ein flexibles Zugelement, beispielsweise durch einen Bowdenzug, der in einer Richtung entgegen der Wirkung einer Feder arbeitet, so daß die Drückstellung des Bauteiles des Antriebes durch die Feder erfolgt, nach dem durch das Bedienungselement sinngemäß eine Freigabe erfolgt. Die Antriebe können nach wie vor die allgemein bekannten Riementriebe sein, deren Scheiben zur Änderung des Übersetzungsverhältnisses in axialer Richtung verschiebbar sind. Die Antriebe erlauben eine stufenlose Verstellung, jedoch wird durch das in verschiedenen Einstellpositionen arretierende Einstellelement als Bedienungselement nunmehr der Antrieb in feinst unterteilte Schaltstufen verändert.

Anhand der beiliegenden Zeichnungen wird die Erfindung noch näher erläutert. Es zeigen:
- In **Fig. 1**: ist beispielhaft ein Landschaftspflegegerät in Form eines Einachsschleppers 10 dargestellt.
- **Figur 2 und 3**: zwei Bedienungselemente in zwei verschiedenen Ausführungen

Das erfindungsgemäße Landschaftspflegegerät kann auch ein Kleinschlepper, ein Rasentraktor oder dgl. sein.

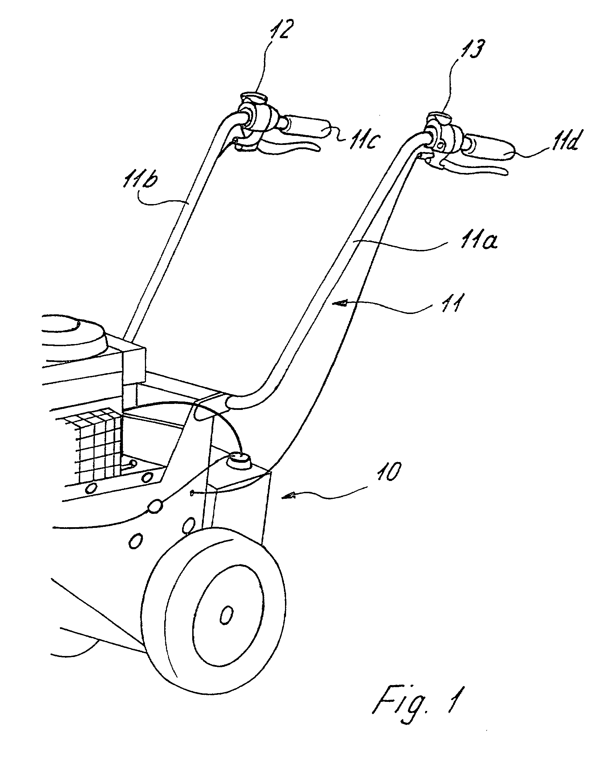

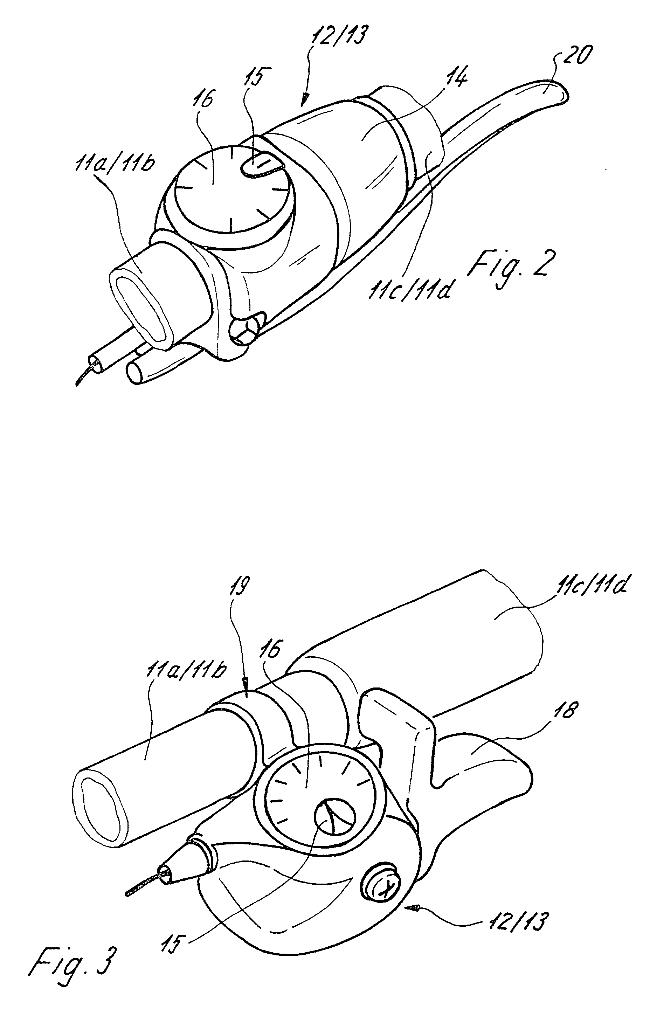

Im dargestellten Ausführungsbeispiel gemäß der Figur 1 ist der Einachsschlepper 10 mit einem Führungslenker 11 ausgestattet, der annähernd U-förmig oder hufeisenförmig gestaltet ist. Auf die freien Enden der beiden Holme 11 a und 11 b des Führungslenkers 11 sind im Bereich der Lenkergriffe 11 c und 11 d Bedienungselemente 12 und 13 aufgesetzt, die unter Bezugnahme auf die Figuren 2 und 3 noch näher erläutert werden.

Mit diesen Bedienungselementen 12 und 13 werden sowohl der Fahrantrieb wie auch der Werkzeugantrieb geregelt. Die Verbindung zu den nicht näher dargestellten Antrieben ist jeweils durch einen Bowdenzug hergestellt. Die Antriebe können verschiedenartig ausgebildet sein, sind jedoch bevorzugt verstellbare Riementriebe.

Für ein Landschaftspflegegerät werden vorzugsweise baugleiche Bedienungselemente 12 und 13 verwendet.

Das Bedienungselement gemäß Figur 3 ist auf das freie Ende des Holmes 11 a bzw. 11 b drehfest aufgeschoben. Es besteht im wesentlichen aus einem Drehgriff 14, der zur Veränderung der Einstellposition des Antriebes drehbar ist. Er steht außerdem konzentrisch zu dem Holm 11 a bzw. 11 b. Der Drehgriff ist antriebstechnisch mit einer drehbaren Scheibe 15 gekoppelt, die in Verbindung mit einer aufgebrachten Skala die Anzeige bildet. Zum Schutz dieser Scheibe ist sie durch eine Platte 16 abgedeckt, die entweder aus einem undurchsichtigen oder aus einem stark getönten Material besteht. Im dargestellten Ausführungsbeispiel ist sie mit einem Fenster ausgestattet, in dem eine die Einstellposition anzeigende Markierung oder eine Ziffer liegt, so daß die das Landschaftspflegegerät führende Person die Einstellposition jederzeit erkennen kann.

Bei der Ausführung nach der Figur 2 ist das Bedienungselement 12 bzw. 13 mit einem Kipphebel 18 ausgestattet, der im und entgegen dem Uhrzeigersinn zur Veränderung der Einstellposition des Antriebes geschwenkt werden kann. Dieser Kipphbel 18 ist ebenfalls über einen Bowdenzug mit dem Stellglied des Antriebes verbunden. Außerdem ist der Kipphebel 18 mit einer eine Skala oder eine Ziffernreihe aufweisenden Scheibe 15 drehbar verbunden. Diese Scheibe 15 ist wiederum durch eine undurchsichtige oder stark getönte Platte 16 abgedeckt, die ebenfalls ein Fenster aufweist, damit die jeweilige Einstellposition erkennbar ist. Die Ausführung nach der Figur 3 ist mittels einer Schelle 19 am Holm 11 a, 11 b befestigt. Bei beiden Ausführungen bildet der Drehgriff 14 bzw. der Kipphebel 18 mit der die Anzeige bildenden Scheibe 15 eine Baueinheit. Bei der Ausführung nach der Figur 2 ist an diese Baueinheit noch ein weiteres Bedienungselement, nämlich ein Zughebel 20 angeschlossen, um gegebenenfalls noch weitere Bauelemente zu regeln, beispielsweise die Drehzahl des Motors.

Die Erfindung ist nicht auf die dargestellten Ausführungsbeispiele beschränkt. Wesentlich ist, daß die Bedienungselemente 14 und 18 mit möglichst geringer Kraft betätigt werden können, und daß die so gewählte Einstellposition sich nicht selbsttätig verändert. Damit eine kompakte und bedienerfreundliche Bauweise erreicht wird, ist es vorteilhaft, wenn die Bedienungselemente 14 bzw. 18 der Anzeige eine Baueinheit bilden.

Da die Bedienungselemente 14 oder 18 in jedem Falle im Bereich der Lenkergriffe 11 c oder 11 d angeordnet sind, besteht für eine ein Landschaftspflegegerät gemäß vorliegender Erfindung führende Person keine Notwendigkeit, zur Veränderung der Einstellposition einen der Lenkergriffe 11 c oder 11 d während des Verstellvorganges loslassen müssen, so daß ständig eine gesicherte Führung des Landschaftspflegegerätes gewährleistet ist.

## Patentansprüche

1. Landschaftspflegegerät mit einem Motor, einem Werkzeugantrieb und gegebenenfalls einem Fahrantrieb, die von im Bereich der Lenkergriffe der das Landschaftspflegegerät führenden Person angeordneten, drehbaren Bedienungselementen einstellbar sind, **dadurch gekennzeichnet, dass** jedes Bedienelement für den Werkzeugantrieb und gegebenenfalls für den Fahrantrieb als in verschiedenen Einstellpositionen arretierendes Einstellelement ausgebildet ist.

2. Landschaftspflegegerät nach Anspruch 1, **dadurch gekennzeichnet, daß** jedes Bedienungselement mit einer die jeweilige Einstellposition erkennbar machenden Anzeige eine Baueinheit bildet.

3. Landschaftspflegegerät nach Anspruch 1 oder 2, **dadurch gekennzeichnet, daß** das Bedienungselement ein Drehgriff (14) oder ein Drehknopf ist, der antriebstechnisch mit einer die Anzeige bildenden Scheibe (15) oder einem Zeiger gekoppelt ist.

4. Landschaftspflegegerät nach Anspruch 3, **dadurch gekennzeichnet, daß** die Drechachsen des Drehgriffes (14) oder des Drehknopfes und der Scheibe (15) im rechten Winkel zueinander stehen.

5. Landschaftspflegegerät nach Anspruch 4, **dadurch gekennzeichnet, daß** der Drehgriff (14) oder Drehknopf (15) konzentrisch zur Mittellängsachse des Holmes (11 a, 11 b) eines Führungslenkers (11) steht.

6. Landschaftspflegegerät nach Anspruch 1 oder 2, **dadurch gekennzeichnet, daß** das Bedienungselement ein Kipphebel (18) ist, der antriebstechnisch mit einer die Anzeige bildenden Scheibe (15) gekoppelt ist.

7. Landschaftspflegegerät nach einem oder mehreren der vorhergehenden Ansprüche, **dadurch gekennzeichnet, daß** an der Baueinheit ein weiteres Bedienungselement, vorzugsweise in Form eines Zughebels (20) gelagert ist.

8. Landschaftspflegegerät nach einem oder mehreren der vorhergehenden Ansprüche, **dadurch gekennzeichnet, daß** das Bedienungselement (14, 18) in jeder Einstellposition durch Rastmittel arretiert ist, die durch einen bestimmten Kraftaufwand entriegelbar sind.

9. Landschaftspflegegerät nach einem oder mehreren der vorhergehenden Ansprüche, **dadurch gekennzeichnet, daß** das Bedienungselement (14, 18) mit einer Schaltscheibe (15) gekoppelt ist, die umfangsseitig mit einer der Anzahl der Einstellpositionen entsprechenden Stückzahl von Ausnehmungen versehen ist, in die ein Verriegelungselement eingreift.

## Claims

1. Agricultural machine having a motor, an implement drive and, if appropriate, a travelling mechanism, it being possible for these to be set by rotatable operating elements arranged in the region of the handlebar grips of the individual guiding the agricultural machine, **characterized in that** each operating element for the implement drive and, if appropriate, for the travelling mechanism is designed as a setting element which is arrested in various setting positions.

2. Agricultural machine according to Claim 1, **characterized in that** each operating element forms a structural unit with a display which shows the respective setting position.

3. Agricultural machine according to Claim 1 or 2, **characterized in that** the operating element is a rotary grip (14) or a rotary knob which is coupled in drive terms to a display-forming disc (15) or an indicator.

4. Agricultural machine according to Claim 3, **characterized in that** the axes of rotation of the rotary grip (14) or of the rotary knob and of the disc (15) are located at right angles to one another.

5. Agricultural machine according to Claim 4, **characterized in that** the rotary grip (14) or rotary knob (15) is located concentrically with the centre longitudinal axis of the shaft (11a, 11b) of a guiding handlebar (11).

6. Agricultural machine according to Claim 1 or 2, **characterized in that** the operating element is a tilting lever (18) which is coupled in drive terms to a display-forming disc (15).

7. Agricultural machine according to one of the preceding claims, **characterized in that** a further operating element, preferably in the form of a pulling lever (20), is mounted on the structural unit.

8. Agricultural machine according to one or more of the preceding claims, **characterized in that**, in each setting position, the operating element (14, 18) is arrested by latching means, which can be unlocked by a certain amount of force being applied.

9. Agricultural machine according to one or more of the preceding claims, **characterized in that** the operating element (14, 18) is coupled to a control disc (15) which is provided around the circumference with a number of recesses which corresponds to the number of setting positions, a locking element engaging in said recesses.

## Revendications

1. Dispositif d'entretien paysager, comprenant un moteur, un entraînement d'outil et le cas échéant un entraînement en translation qui sont réglables à l'aide d'éléments de commande tournants, disposés au niveau des poignées de guidon pour la personne conduisant le dispositif d'entretien paysager, **caractérisé en ce que** chaque élément de commande pour l'entraînement d'outillage et le cas échéant pour l'entraînement en translation est réalisé sous la forme d'un élément de réglage qui se bloque dans différentes positions de réglage.

2. Dispositif d'entretien paysager selon la revendication 1, **caractérisé en ce que** chaque élément de commande forme une unité modulaire avec un affichage permettant de rendre visible la position de réglage respective.

3. Dispositif d'entretien paysager selon la revendication 1 ou 2, **caractérisé en ce que** l'élément de commande est une poignée tournante (14) ou un bouton tournant qui est couplé(e) en entraînement avec un disque (15) ou une aiguille formant l'affichage.

4. Dispositif d'entretien paysager selon la revendication 3, **caractérisé en ce que** les axes de rotation de la poignée tournante (14) ou du bouton tournant et du disque (15) se trouvent mutuellement à angle droit,

5. Dispositif d'entretien paysager selon la revendication 4, **caractérisé en ce que** la poignée tournante (14) ou le bouton tournant (15) est situé(e) de façon concentrique par rapport à l'axe longitudinal central du longeron (11a, 11b) d'un guidon de conduite (11).

6. Dispositif d'entretien paysager selon la revendication 1 ou 2, **caractérisé en ce que** l'élément de commande est un levier oscillant (18) qui est couplé en entraînement à un disque (15) formant l'affichage.

7. Dispositif d'entretien paysager selon une ou plusieurs des revendications précédentes, **caractérisé en ce qu'**un autre élément de commande, de préférence sous la forme d'un levier de traction (20), est monté au niveau de l'unité modulaire.

8. Dispositif d'entretien paysager selon une ou plusieurs des revendications précédentes, **caractérisé en ce que** l'élément de commande (14, 18) est bloqué dans chaque position de réglage par des moyens d'arrêt qui peuvent être déverrouillés par un certain effort.

9. Dispositif d'entretien paysager selon une ou plusieurs des revendications précédentes, **caractérisé en ce que** l'élément de commande (14, 18) est couplé à une rondelle de commutation (15) qui est munie à sa circonférence d'un certain nombre d'évidements, correspondant au nombre des positions de réglage, dans lesquels s'engage un élément de verrouillage.
